# EUROPEAN PATENT SPECIFICATION

(11) **EP 0 692 456 B1**
(45) Date of publication and mention of the grant of the patent: **14.10.1998**
(21) Application number: 95201933.9
(22) Date of filing: 13.07.1995
(51) Int. Cl.: C01F 11/46, C09C 1/02, D21H 17/67

(54) **Process to obtain a radial filler, especially for use in the paper industry, a filler product formed from anhydrite II and hemihydrate and composition suitable for preparing such a filler**
Verfahren zur Herstellung eines radialen Füllstoffes, insbesondere zur Verwendung in der Papierindustrie, Füllstoff hergestellt aus Anhydrit II und Halbhydrat und eine für die Herstellung dieses Füllstoffs verwendbare Zusammensetzung
Procédé d'obtention d'une charge radiale, destinée en particulier à l'industrie papétière, charge obtenue formée de sulfate de calcium anhydre II et hémihydrate et composition pour préparer une telle charge

(30) Priority: 15.07.1994 ES 9401557
(43) Date of publication of application: 17.01.1996
(73) Proprietor: COMPANIA GENERAL YESERA, S.A., 17850 Besalu (Gerona) (ES)
(72) Inventor: Bosch Grau, Agusti, E-17850 Besalu (Gerona) (ES)
(74) Representative: Ungria Lopez, Javier

(56) References cited:
- EP-A- 0 056 200
- EP-A- 0 334 292
- WO-A-88/05423
- FR-A- 2 667 585

## Description

### OBJECT OF THE INVENTION

The present invention refers to a process to prepare a radial filler for use in the paper industry and a filler product of calcium sulfate dihydrate obtained by cocrystallization of hemihydrate and anhydrous calcium sulfates. The invention basically consists of the preparation of a ponderal mixture of the hemihydrate and anhidrite II forms of CaSO₄ between which synergical interaction is produced which results in a regulated crystallization process, with the formation of calcium sulfate dihydrate crystals, of a radial or star shape that has excellent properties as a filler in papermaking. Hence, the filler has a high degree of opacity, whiteness and retention and grants greater mechanical resistance to a sheet of paper in comparison to conventional fillers. The crystallized filler can be added to the papermaking process directly in solution, or after drying and redispersion in an aqueous medium. According to one of the preferred embodiments, preparation of the filler and removal of the crystal dispersion are done continuously.

### BACKGROUND OF THE INVENTION

Calcium sulfate is one of the fillers that is traditionally used in papermaking. It can be in various states of hydration, that is to say CaSO₄ (anhydrous), CaSO₄ 1/2 H₂O (hemihydrate) and CaSO₄ . 2H₂O (dihydrate.)

In its natural state the form mainly present of calcium sulfate is its dihydrate, though in a smaller proportion it is also found in anhydrous form. The hemihydrate is not practically found in its natural state since it is very unstable due to its high hygroscopic degree that produces rapid absorption of the molecule and a half of water and the subsequent conversion of the hemihydrate into dihydrate.

Anhydrite can in turn be present in three forms, that is to say: anhydrite II (insoluble in water), anhydrite III (water soluble) and anhydrite I.

In its natural state, anhydrite II is metastable and hydrates rapidly. Anhydrite II is the form that is found in nature, but it is also obtained by roasting at a high temperature the dihydrate and hemihydrate forms. Anhydrite I is formed by roasting at a high temperature (higher than 1,800^{º} C) and it is not normally produced commercially.

Anhydrite crystallizes in the prismatic system, hemihydrate in the rhombohedron system and the dihydrate in the monoclinic system (Ullmann's Encyclopedia of Industrial Chemistry, Reprint vol. A.4, 1985), forming prismatic habit crystals and frequently in arrow point or swallow-tail macles.

Native calcium sulfate (dihydrate) loses a molecule and a half of water when it is subjected to temperatures around 175^{º}C to pass to the hemihydrate form and, when it is subjected to higher temperatures, at approximately 700^{º} C, it loses all the crystallization water passing to the anhydrite form.

Calcium sulfate hemihydrate, depending on the conditions of temperature and pressure that are used in the preparation thereof, is present in two different forms, alpha and beta, that are differentiated by their hydration heat and the specific uses thereof.

Thus, the alpha hemihydrate is comprised of compact, well formed and transparent primary particles while the beta hemihydrate has scaly and wrinkled secondary particles, formed from very small crystals (Ullmann's Encyclopedia of Industrial Chemistry, Reprint vol. A. 4, 1985.) The beta hydrate form is obtained by thermal treatment of the dihydrate at atmospheric pressure while the alpha hemihydrate form is obtained by thermal treatment under steam pressure higher than atmospheric pressure, which results in the costs to obtain beta hemihydrate being lower hence the beta hydrate is more commonly used.

Anhydrite II is used , among other industrial sectors, in formulations of cement and also as a filler in papermaking. Anhydrite III, due to its hygroscopicity is used as a desiccant for solids, organic liquids and gases. The hemihydrate is used as construction material, in the manufacture of molds and figurines, and as a filler in the paper industry (The Merck Index, 11th. Ed.)

A process to obtain calcium sulfate dihydrate crystals from alpha or beta hemihydrate is described in European patent application EP-A-0334292. Said process results in the obtainment of acicular crystals having a predefined length and shape factor, whose crystals can be used as fillers in different industries. The method requires the presence of at least one crystallization regulator that is selected in terms of the length desired for the crystals to be obtained. After crystallization in an aqueous medium, according to European patent application EP-A-0334292 the crystals may either be kept in dispersion in saturated calcium sulfate water, or they can be separated from their aqueous matrix by pressurized or vacuum filtration, centrifugation or any other conventional process, subsequently drying and roasting the crystalline mass. Such manipulations have the inconvenience that they can modify or degrade the acicular crystalline structures, due to breakage of said crystals when they are subjected to mechanical treatments, or to alterations due to subsequent digestion when the crystals remain in an aqueous medium for a specific amount of time.

European patent EP-0056200-B1 describes a method for the preparation in an aqueous medium and use thereof in papermaking, of individual calcium sulfate dihydrate crystals with an acicular structure from hydration of calcium sulfate hemihydrate. Such acicular crystals form together open reticular structures that attach to the cellulose fibers by electrostatic interactions between the respective surface ionic charges. This method has the inconvenience that the aqueous dispersion of the acicular crystals must be used fresh, that is to say it cannot be stored, nor subjected to dehydration processes to facilitate transport.

Patent application WO 88/05423 describes a method to prepare a filler for the paper industry from hydrating a calcium sulfate hemihydrate by continuous addition and agitation in a reactor. This method comprises the addition of reagents that modify the crystalline habit such as sulfuric acid, sodium chloride, potassium sulfate or magnesium sulfate for example to produce acicular tabular-shape calcium sulfate dihydrate crystals with an average particle size of a length longer than 45-350 micra and a ratio between primary and secondary lengths of about 10:1 whose ratio must also be kept between the secondary and tertiary lengths. The method to prepare the acicular crystals described in application WO 88/05423 also comprises the classification of crystals by size before they are used in the paper machine, recirculating the crystals shorter than 45 micra to act as seeding in the formation of new acicular crystals. This method has the inconvenience of producing large-sized acicular crystals that, on the one hand, are susceptible to breaking rather easily upon being applied and, on the other hand, they cause reductions, in the mechanical properties of the paper due to the deficient degree of inclusion between the cellulose fibers.

French patent FR-A-2667585 of the same applicant describes a process and an installation to obtain a filler comprised of calcium sulfate, used in the paper industry. According to this process, a hydration reaction of anhydrite III is carried out and aluminum sulfate is added, providing thermal energy in the form of saturated steam until the reaction mass reaches an average temperature of 42^{º} C. In this way crystals with a homogenous size with average lengths from 10 to 15 micra and average diameters of 0.3 to 0.5 micra are obtained. Although this process improves the properties of the filler with regard to other methods to obtain acicular calcium sulfate dihydrate crystals, the capacity of replacement of cellulose fibers and of retention is limited by spatial interference that is produced between the cellulose fibers and said acicular crystals.

In the method described in application WO 88/05423 as well as in European patent application EP-A-0334292 chemical compounds different from that which is to be crystallized are used as crystallization regulators which has the inconvenience that lateral effects based on interactions between said regulators and the compounds that must be crystallized may be produced.

### DESCRIPTION OF THE INVENTION

The object of the present invention is to overcome the inconveniences of the processes and of the fillers based on the calcium sulfate forms described in the prior art, as far as the characteristics of the filler itself are concerned as well as with regard to the influence of the filler on the quality of paper.

The invention refers to a process to prepare a radial filler for use in the paper industry, and to a calcium sulfate dihydrate product obtained by cocrystallization of hemihydrate calcium sulfates and anhydrite I I as well as to a composition that comprises said sulfates. The process comprises the preparation of a composition from a ponderal mixture of hemihydrate calcium sulfate and anhydrite II, and the inclusion thereof under agitation in an aqueous medium in proportions higher than the supersaturation point of the solution, in which calcium sulfate dihydrate molecules crystallize linearly and divergently the molecules being formed from the hemihydrate, on nuclei comprised of anhydrite II. Crystallization takes place without the need of crystallization regulators chemically different from calcium sulfate since anhydrite II acts as such a regulator.

The filler product is comprised at least partially of star-shaped crystalline aggregates that have an exceptional electrostatic adhesion with the cellulose fibers and due to the multiple ramifiactions thereof, it shows excellent physical interaction with the framework formed by the cellulose fibers.

The process for the preparation of the filler that comprises star-shaped radial crystalline aggregates, is based on cocrystallization of calcium sulfates in aqueous dispersion, adding calcium sulfate anhydrite II and hemihydrate calcium sulfate in proportions weight, establishing a synergical interaction between both components in the crystallization without the need of outside crystallization regulators.

On the other hand, the filler for papermaking, provides excellent properties of whiteness, opacity, retention and better mechanical resistance of the sheet of papere in comparison with conventional fillers, as well as excellent interaction with cellulose fibers.

The process and the filler according to the present invention differ from those pointed out in the prior art, basically due to the shape that at least one part of the crystals have. Contrary to conventional processes and calcium sulfate fillers, the preferred habit to promote is not the acicular shape for individual crystals, but rather a complex crystalline structure. This consists of the growth of calcium sulfate dihydrate crystals that diverge radially from a center anhydrite nucleus, thus obtaining a star-shaped crystal shape with average diameters basically comprised between 25 and 60 micra. Within this range, crystals selected between 30-55 or 40-50 micra are normally used.

The invention is based on the general principal that there are normally two phases of crystallization of a product in solution, that is to say the formation or nucleation and the growth of the crystal.

So that the crystal formation process starts, the solution must be in a state of supersaturation nucleation being the formation of a new solid phase in the center of the supersaturated solution that can be done, on particles of the solution itself or on particles unconnected with it. The crystallization nuclei formation speed essentially depends on the degree of supersaturation of the solution. Thus, when the degree of supersaturation is low said speed is slow while when the degree of supersaturation is high, the nucleation speed is also high.

The crystal growth phase is only started when nuclei or other seeded particles are present the speed growth also being proportional to the supersaturation of the solution.

The distribution of the particle size of the crystallized mass depends on the relation between the above cited nucleation and growth phases. When, upon starting crystallization, the nucleation level is high, many small crystals are formed while, when the initial nucleation level is low few and bigger crystals are formed. Between both extremes, there is a multitud of intermediate situations with variable nucleation and growth speeds depending on the intervening compounds, the speed and type of agitation, concentration, etc. Thus controlling the concentration of the dosed products the crystal growth can be regulated. That is to say, by increasing or decreasing the supersaturation level of a solution and with it the crystallization nuclei supply the growth andsize of the crystals can be controlled.

In accordance with the present invention, in an aqueous medium calcium sulfate particles in the anhydrite II form are introduced for formation of the crystallizatin nuclei while the calcium sulfate hemihydrate is introduced for growth of crystals.

With the introduction of anhydrite II, crystallization of calcium sulfate gives rise to radial formations generated by groups of crystals diverging from a common point, constituted by anhydrite. The resulting crystalline formations improve the characteristics of the conventional calcium sulfate fillers consisting only of acicular crystals giving the whole a better retention capacity, better optical properties and less fragility to mechanical stresses.

The star-shaped crystals keep in each one of their ramifications the distribution of ionic surface charges typical of calcium sulfate dihydrate.

The better retention of said crystals by the cellulose fibers is related to the physical interaction between both, and with the electrostatic affinity between the ionic charges of the respective surfaces. Thus, in star-shaped crystals the effect of the electrostatic surface interaction on the retention remains multiplied by the number of diverging arms from each one of the crystals. Besides, the physical interaction between cellulose fibers and the star-shaped crystals of the present invention is improved in comparison with conventional calcium sulfate fillers, due to the higher number of anchoring points that each one of the ramifications offers.

The whiteness and opacity that the use of the filler of the present invention offers are greater than those of calcium sulfate dihydrate crystallized in needles. This is due to the presence of anhydrite that in itself has a whiteness and refraction index higher than the corresponding values of calcium sulfate dihydrate, and to a greater optically active surface that offers the radial arrangement of the star-shaped crystals. The outstanding influence of anhydrite on the optical properties of the filler derive from their nucleating function in the formation of star-shaped crystals and also to the presence thereof in the dispersion in free crystal form.

The process object of the invention comprises the following phases:

A mixture of solids consisting of 10 to 90% by weight, preferably 15 to 35%, of calcium sulfate anhydrite II and 10 to 90% by weight, preferably 65 to 85% of calcium sulfate hemihydrate, is prepared. The size of the particles in said mixture is comprised between 0.1 and 50 microns. Optionally, each one of the starting products or the mixture of solids can be classified and separated according to the particle sizes in the following groups:
O.1 to 5 microns
5 to 15 microns
15 to 50 microns

Said mixture is introduced in a reaction tank that contains an aqueous medium, provided with agitation means, as well as controllable dosage means for water and said mixture, as well as means for controlled extraction of the dispersion, to obtain a calcium sulfate dihydrate dispersion.

Afterwards, additional amounts of the mixture are introduced for the purpose of producing supersaturation of the solution.

Due to the fact that the solubilization kinetics of anhydrite II is slower than that of the hemihydrate, at a higher percentage of anhydrite II in the mixture, a higher proportion of crystallization nuclei for the hemihydrate is produced, deposition of the calcuim sulfate molecules on the anhydrite II nuclei starts sooner and the degree of supersaturation of the solution drops.

Likewise, in accordance with the general principles of crystallization mentioned above, the resulting crystalline structures vary in terms of the grain size of each one of the starting products, of the ponderal ratio thereof in the mixture, of the degree of supersaturation, of the rate of addition to the reaction tank, of the speed and duration of agitation, therefore by regulating these variables, star-shaped crystalline aggregates can be obtained in different proportions and sizes.

In this sense, the smaller the particle size, the faster the dissolution speed and, consequently, the supersaturation point of the solution is reached sooner and, thus, the start of crystallization. Control of the concentration of the solid products in the supersaturated solution allows adjustment of the growth of the crystals.

Once the star-shaped crystals with the desired shapes have been formed, the dispersion is removed from the reaction tank.

Irrespective of the advantages of the final crystalline product, the process of the present invention has the advantage that, contrary to the conventional processes in which chemical compounds different from the one that is to be crystallizedare used as crystallization regulators, anhydrite II that acts as a nucleation agent in the formation of stars, and the calcium sulfate hemihyhydrate, correspond to the same chemical compound in different states of hydration, therefore, the interactions between different compounds and the side effects intrinsic to nucleation methods of the prior art, are avoided. Likewise, the use of the anhydrite II/hemihydrate mixture makes it possible to simplify the preparation method without having to modify the pH of the reaction mixture or to have to increase the number of different ionic species, which also reduces the risk of pollution of the waste water to public channels.

The excess anhydrite that did not intervene as a nucleus forming radial habit crystals and that, thus, would remain free in disperson, will become part of the distribution of the size of the particles of the group with lower diameters, increasing the covering capacity of the filler.

### DESCRIPTION OF THE FIGURES

Figure 1 is a schematic view of an installation to prepare dispersions in accordance with the present invention.

Figure 2 is a photograph of a sample of a filler corresponding to the invention.

### DESCRIPTION OF A PRACTICAL EMBODIMENT OF THE INVENTION

The process of the present invention will be explained hereinafter according to one of its practical embodiments, in accordance with an installation that is shown schematically in the attached figure, wherein the numerical references have the following meanings:
- 1: gas outlet filter
- 2: storage silo
- 3: fluidification system
- 4: transport mechanism
- 5: reaction tank
- 6: reaction tank agitation system
- 7: overflow level with lump filter
- 8: valve to adjust the flow of feed water to the reactor
- 9: feed water flowmeter
- 10: waiting tank
- 11: waiting tank agitation system
- 12: LCT level control system
- 13: valve to adjust the outlet flow of the waiting tank
- 14: dosing pump to the paper machine

### EXAMPLE 1

Calcium sulfate dihydrate of natural origin is subjected to a conventional roasting process at about 175^{º} C to obtain calcium sulfate hemihydrate. On the other hand, calcium sulfate dihydrate of natural origin is roasted, by any conventional method, at a temperature of about 800^{º} C, to obtain calcium sulfate anhydrite II. A suitable method is described for example in Spanish patent application no. ES-8700071 of the same applicant. These products are ground and micronized in conventional hammer mills.

Then, each one of the products is classified according to the particle sizes in one of the following groups:
0.1 to 5 microns
5 to 15 microns
15 to 50 microns

Then, one of the groups of each one of the starting products is selected and they are mixed in a conventional mixer in a proportion between 15 and 35 % of anhydrite II and 85 and 65% calcium sulfate hemihydrate. The selection of each one of the groups of sizes and the proportions is done depending on the proportion and sizes of star-shaped crystals that are to be desired.

This mixtrure of solids is stored in a silo (2) with a filter (1) in its top part for gases to flow out, the unit being leakproof due to the high hygroscopicity of the solids.

In the bottom part of the silo there is a variable speed dosage and fluidification system (3.)

To obtain homogeneity of the concentration, the variation of the speed of addition of the product must be proprotional to the flow of added water.

The reaction tank (5) is made out of stainless steel and is provided with an adjustable flow water dosage point (8, 9) and a overflow level (7) to keep the retention time preset. Likewise, the tank has a convetional agitation system (6) capable of rendering high shearing stress comprised of for example Cowles blades, a shaft, a moto-reducing assembly, bearings, etc. The water dosing adjustment mechanism (8) comprises a conventional magnetic flowmeter (9) and a conventional automatic valve (8) , operated by LCT level probes (12) installed in the storage silo (2) and the reaction tank (5.) The outlet of the overflow level (7) has a conventional lump filter to prevent the passing of grains or impurities to a waiting tank (10) from which the dispersion with the star-shaped calcium sulfate dihydrate crystals is added to the papermaking machine.

Said waiting tank (10) is equipped with a multi-blade agitator (11) that operates at low revolutions and it is also provided with level probes (12) interconnected with the level probes (12) of the reaction tank therefore they also co-control the water dosing mechanisms (8) and solid products.

In the reaction tank (5) the proportion of anhydrite II is kept at a percentage selected between 15 to 35 % referred to the total weight of the anhydrite II / hehihydrate mixture. Likewise, the supersaturation level of the solution is kept constant for the purpose of allowing uniform growth of the star-shaped crystals and homogeneous sizes. At the outlet of the waiting tank (10), there is a flow adjustment valve (13) and a magnetic flowmeter.

The dosing of the dispersion to the paper machine is done by means of a conventional mono or centrifugal type pump (14.)

The water used to prepare the dispersion must be clean and not contain residues from other processes in order to avoid interferences in the crystallization.

### EXAMPLE 2

A mixture of solids comprised of 15% by weight of calcium sulfate anhydrite II and 85% by weight of calcium sulfate hemihydrate is prepared.

The particle sizes of the starting products are classified in a conventional dynamic cage classifier in such a way that the average particle size of each one of the two components of the mixture is approximately 5 micra. For calcium sulfate hemihydrate, in this example approximately 10% by weight of the total of the particles have a size smaller than 1 microns and for calcium sulfate anhydrite II, 18% by weight of the total of the particles has a size smaller than 1 microns.

The mixture of solids is introduced in a reaction tank with a total capacity of 3.5 m³, simultaneously to the supply of a proportional flow of water, to obtain an aqueous dispersion of calcium sulfate anhydrite and calcium sulfate dihydrate crystals at 20 % by weight.

Due to the fact that the solubilization rate of calcium sulfate hemihydrate is higher than that of calcium sulfate anhydrite, and that the finest particles solubilize faster than thick particles, mainly the fine calcium sulfate hemihydrate particles are responsible for the saline saturation of the reaction water, thus it is enhanced in the presence of suspension of the particles, of calcium sulfate anhydrite, which consequently act as crystallization nuclei in the formation of star-shaped aggregates.

The level of the reaction mixture in the reaction tank is kept constant by means of a siphon system that pours over to a decanting tank from which it is pumped to a storage tank, controlled by maximum and minimum levels, and that feeds the suspension to the paper machine, through a self-controlled circuit and a circuit controlled by a computer of the paper machine.

In this way, from the minimum level signal in the storage tank, the dosing of the product (approx. 2,600 kg/h) and the supply of dilution water (approx. 10.4 m³/h) starts.

The reaction mixture is subjected to intense shearing force for at least 10 minutes by means of agitator equipment comprised of a direct coupling motor turning at 1,500 rpm and a cowless disk,

The concentration of the dispersion is kept at 20% (w/w) of solids in water.

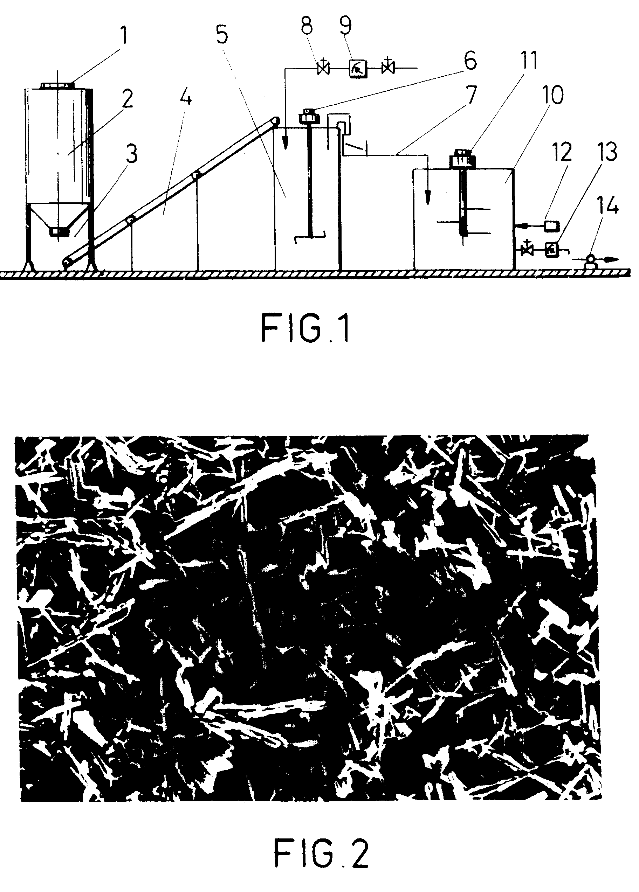

Figure 2 shows the aspect of the sample obtained in the outlet of the reaction tank. The presence of star-shaped crystals can be seen.

## Claims

1. Process to prepare a radial filler, especially for the use in the paper industry, characterized in that it comprises:
- preparing a calcium sulfate hemihydrate solid with a particle size between 0.1 and 50 microns;
- preparing a calcium sulfate anhydrite II solid with a particle size between 0.1 and 50 microns;
- mixing said solids in anhydrite II/hemihydrate proportions between 10:90 and 90:10% by weight, preferably between 15:85 and 35 to 65% by weight;
- adding in a controlled manner the anhydrite II/hemihydrate mixture to an aqueous medium until a predetermined degree of supersaturation of the solution is obtained, in a reactor provided with agitation means, until star-shaped calcium sulfate dihydrate crystals in dispersion are obtained;
- using the calcium sulfate anhydrite II to form crystallization nuclei to generate radial formations of groups of diverging crystals, while the calcium sulfate hemihydrate is used to form acicular crystals that bond with said radial formations; and
- selecting the proportions of water, anhydrite II and hemihydrate, the particle size of the solids, the duration and the conditions of agitation and the degree of supersaturation depending on the size and proportion of said star-shaped crystals.

2. A filler product comprised of calcium sulfate dihydrate crystals, especially for papermaking, characterized in that it is obtained by crystallization of a mixture of calcium sulfate anhydrite II and calcium sulfate hemihydrate with particle sizes between 0.1 and 50 microns in a supersaturated aqueous solution, one part of the crystals having at least a three-dimensional star shape whose nucleus is formed from anhydrite II and whose radial formations are formed by diverging and linear crystallization of the calcium sulfate hemihydrate.

3. A composition useful to prepare a filler for papermaking from calcium sulfate characterized in that it comprises between 10 and 90%, preferably between 65 and 85%, of a calcium sulfate hemihydrate solid with a particle size between 0.1 and 50 microns, and between 90 and 10%, preferably between 35 and 15% anhydrous calcium sulfate.

4. Process according to claim 1, characterized in that calcium sulfate hemihydrate with a particle size between 0.1 and 5 microns is chosen.

5. Process according to claim 1, characterized in that calcium sulfate hemihydrate with a particle size between 5 and 15 microns is chosen.

6. Process according to claim 1, characterized in that calcium sulfate hemihydrate with a particle size between 15 and 50 microns is chosen.

7. Process according to claim 1, characterized in that calcium sulfate anhydrite II with a particle size between 0.1 and 5 micra is chosen.

8. Process according to claim 1, characterized in that calcium sulfate anhydrite II with a particle size between 5 and 15 microns is chosen.

9. Process according to claim 1, characterized in that calcium sulfate anhydrite II with a particle size between 15 and 50 microns is chosen.

10. Process according to any of the above claims, characterized in that the addition of water and of said solids as well as the extraction of the dispersion of the calcium sulfate dihydrate star-shaped crystals are continuous.

11. Process according to claim 10, characterized in that the volume of the solution in the reactor is kept substantially constant.

12. Process according to any of the above claims, characterized in that the solids are kept in suspension with solute concentrations higher than the supersaturation point of the suspension.

13. Process according to claim 11, characterized in that the dispersion of crystals is extracted proportionally to the addition of water and solids.

14. Process according to claim 1, characterized in that the dispersion of star-shaped crystals is dehydrated.

15. Product according to claim 2, characterized in that the calcium sulfate hemihydrate has a particle size between 0.1 and 5 microns.

16. Product according to claim 2, characterized in that the calcium sulfate hemihdyrate has a particle size between 5 and 10 microns.

17. Product according to claim 2, characterized in that the calcium sulfate hemihydrate has a particle size between 15 and 50 microns.

18. Product according to claim 2, characterized in that the calcium sulfate anhydrite II has a particle size between 0.1 and 5 microns.

19. Product according to claim 2, characterized in that the calcium sulfate anhydrite II has a particle size between 5 and 15 microns.

20. Product according to claim 2, characterized in that the calcium sulfate anhydrite II has a particle size between 15 and 50 microns.

21. Product according to claim 2, characterized in that it is an aqueous suspension with a concentration of solids between 10 and 30%.

22. Product according to claim 21, characterized in that it has a concentration of solids between 15 and 20%.

23. Product according to any of the claims 2, 15-22 characterized in that it is a dehydrated powder that is redispersable in an aqueous medium.

24. Product according to any of the claims 2, 15-23 characterized in that the average diameter of the crystals is between 25 and 60 microns.

25. Product according to claim 24 characterized in that the average diameter of the crystals is from 30 to 55 microns.

26. Product according to claim 25 characterized in that the average diameter of the crystals is from 40 to 50 microns.

27. Composition according to claim 3 characterized in that it contains calcium sulfate hemihydrate with a particle size between 5 and 10 microns.

28. Composition according to claim 3 characterized in that it contains calcium sulfate hemihydrate with a particle size between 15 and 50 microns.

29. Composition according to claim 3 characterized in that it contains calcium sulfate anhydrite II with a particle size between 0.1 and 5 microns.

30. Composition according to claim 3 characterized in that it contains calcium sulfate anhydrite II with a particle size between 5 and 15 microns.

31. Composition according to claim 3 characterized in that it contains calcium sulfate anhydrite II with a particle size between 15 and 50 microns.

32. Composition according to claim 2, characterized in that the average diameter of the star-shaped three-dimensional crystals is from 25 to 60 microns.

33. Composition according to claim 32 characterized in that the average diameter of the crystals is from 30 to 55 microns.

34. Composition according to claim 32 characterized in that the average diameter of the crystals is from 40 to 50 microns.

## Patentansprüche

1. Verfahren zum Herstellen eines radialen Füllstoffs, insbesondere zur Verwendung in der Papierindustrie, **dadurch gekennzeichnet,** daß es umfaßt:
- Herstellen eines Calciumsulfat-Halbhydrat-Feststoffs mit einer Teilchengröße zwischen 0,1 und 50 µm;
- Herstellen eines Calciumsulfat-Anhydrit II-Feststoffs mit einer Teilchengröße zwischen 0,1 und 50 µm;
- Vermischen der Feststoffe, wobei das Verhältnis von Anhydrit II zu Halbhydrat zwischen 10 : 90 und 90 : 10 Gew.-%, vorzugsweise zwischen 15 : 85 und 35 : 65 Gew.-% liegt;
- geregelte Zugabe des Anhydrit II/Halbhydrat-Gemisches zu einem wäßrigen Medium, bis ein vorgegebener Übersättigungsgrad der Losung erreicht ist, in einem mit Mitteln zum Rühren versehenen Reaktor, bis sternförmige Calciumsulfat-Dihydrat-Kristalle in Dispersion erhalten werden;
- Verwenden des Calciumsulfat-Anhydrit II zum Bilden von Kristallisationskeimen zum Erzeugen von radialen Gebilden aus Gruppen von divergierenden Kristallen, während das Calciumsulfat-Halbhydrat verwendet wird zum Bilden von nadelförmigen Kristallen, die an die radialen Gebilde binden; und
- Auswählen der Anteile von Wasser, Anhydrit II und Halbhydrat, der Teilchengröße der Feststoffe, der Dauer und der Bedingungen des Rührens und des Übersättigungsgrads in Abhängigkeit von der Größe und dem Anteil der sternförmigen Kristalle.

2. Füllstoffprodukt, das sich aus Calciumsulfat-Dihydrat-Kristallen zusammensetzt, insbesondere zur Papierherstellung, **dadurch gekennzeichnet,** daß es erhalten wird durch Kristallisation eines Gemisches aus Calciumsulfat-Anhydrit II und Calciumsulfat-Halbhydrat mit Teilchengrößen zwischen 0,1 und 50 µm in einer übersättigten wäßrigen Lösung, wobei ein Teil der Kristalle mindestens eine dreidimensionale Sternform aufweist, deren Kern aus Anhydrit II gebildet ist, und deren radiale Gebilde durch eine divergierende und lineare Kristallisation des Calciumsulfat-Halbhydrats gebildet sind.

3. Zusammensetzung, die zum Herstellen eines Füllstoffs zur Papierherstellung aus Calciumsulfat brauchbar ist, **dadurch gekennzeichnet,** daß sie zwischen 10 und 90 %, vorzugsweise zwischen 65 und 85 % eines Calciumsulfat-Halbhydrat-Feststoffs mit einer Teilchengröße zwischen 0,1 und 50 µm und zwischen 90 und 10 %, vorzugsweise zwischen 35 und 15 % wasserfreies Calciumsulfat umfaßt.

4. Verfahren nach Anspruch 1, **dadurch gekennzeichnet,** daß Calciumsulfat-Halbhydrat mit einer Teilchengröße zwischen 0,1 und 5 µm ausgewählt wird.

5. Verfahren nach Anspruch 1, **dadurch gekennzeichnet,** daß Calciumsulfat-Halbhydrat mit einer Teilchengröße zwischen 5 und 15 µm ausgewählt wird.

6. Verfahren nach Anspruch 1, **dadurch gekennzeichnet,** daß Calciumsulfat-Halbhydrat mit einer Teilchengröße zwischen 15 und 50 µm ausgewählt wird.

7. Verfahren nach Anspruch 1, **dadurch gekennzeichnet,** daß Calciumsulfat-Anhydrit II mit einer Teilchengröße zwischen 0,1 und 5 µm ausgewählt wird.

8. Verfahren nach Anspruch 1, **dadurch gekennzeichnet,** daß Calciumsulfat-Anhydrit II mit einer Teilchengröße zwischen 5 und 15 µm ausgewählt wird.

9. Verfahren nach Anspruch 1, **dadurch gekennzeichnet,** daß Calciumsulfat-Anhydrit II mit einer Teilchengröße zwischen 15 und 50 µm ausgewählt wird.

10. Verfahren nach einem der vorstehenden Ansprüche, **dadurch gekennzeichnet,** daß die Zugabe von Wasser und der Feststoffe sowie die Extraktion der Dispersion der sternförmigen Calciumsulfat-Dihydrat-Kristalle kontinuierlich erfolgt.

11. Verfahren nach Anspruch 10, **dadurch gekennzeichnet,** daß das Volumen der Lösung in dem Reaktor im wesentlichen konstant gehalten wird.

12. Verfahren nach einem der vorstehenden Ansprüche, **dadurch gekennzeichnet,** daß die Feststoffe in Suspension gehalten werden, wobei die Konzentrationen der gelösten Stoffe höher als der Übersättigungspunkt der Suspension sind.

13. Verfahren nach Anspruch 11, **dadurch gekennzeichnet,** daß die Dispersion der Kristalle proportional zu der Zugabe von Wasser und Feststoffen extrahiert wird.

14. Verfahren nach Anspruch 1, **dadurch gekennzeichnet,** daß die Dispersion der sternförmigen Kristalle entwässert wird.

15. Produkt nach Anspruch 2, **dadurch gekennzeichnet,** daß das Calciumsulfat-Halbhydrat eine Teilchengröße zwischen 0,1 und 5 µm aufweist.

16. Produkt nach Anspruch 2, **dadurch gekennzeichnet,** daß das Calciumsulfat-Halbhydrat eine Teilchengröße zwischen 5 und 10 µm aufweist.

17. Produkt nach Anspruch 2, **dadurch gekennzeichnet,** daß das Calciumsulfat-Halbhydrat eine Teilchengröße zwischen 15 und 50 µm aufweist.

18. Produkt nach Anspruch 2, **dadurch gekennzeichnet,** daß das Calciumsulfat-Anhydrit II eine Teilchengröße zwischen 0,1 und 5 µm aufweist.

19. Produkt nach Anspruch 2, **dadurch gekennzeichnet,** daß das Calciumsulfat-Anhydrit II eine Teilchengröße zwischen 5 und 15 µm aufweist.

20. Produkt nach Anspruch 2, **dadurch gekennzeichnet,** daß das Calciumsulfat-Anhydrit II eine Teilchengröße zwischen 15 und 50 µm aufweist.

21. Produkt nach Anspruch 2, **dadurch gekennzeichnet,** daß es eine wäßrige Suspension mit einer Feststoffkonzentration zwischen 10 und 30 % ist.

22. Produkt nach Anspruch 21, **dadurch gekennzeichnet,** daß es eine Feststoffkonzentration zwischen 15 und 20 % aufweist.

23. Produkt nach einem der Ansprüche 2, 15-22, **dadurch gekennzeichnet,** daß es ein entwässertes Pulver ist, das in einem wäßrigen Medium wiederdispergiert werden kann.

24. Produkt nach einem der Ansprüche 2, 15-23, **dadurch gekennzeichnet,** daß der mittlere Durchmesser der Kristalle zwischen 25 und 60 µm beträgt.

25. Produkt nach Anspruch 24, **dadurch gekennzeichnet,** daß der mittlere Durchmesser der Kristalle 30 bis 55 µm beträgt.

26. Produkt nach Anspruch 25, **dadurch gekennzeichnet,** daß der mittlere Durchmesser der Kristalle 40 bis 50 µm beträgt.

27. Zusammensetzung nach Anspruch 3, **dadurch gekennzeichnet,** daß sie Calciumsulfat-Halbhydrat mit einer Teilchengröße zwischen 5 und 10 µm enthält.

28. Zusammensetzung nach Anspruch 3, **dadurch gekennzeichnet,** daß sie Calciumsulfat-Halbhydrat mit einer Teilchengröße zwischen 15 und 50 µm enthält.

29. Zusammensetzung nach Anspruch 3, **dadurch gekennzeichnet,** daß sie Calciumsulfat-Anhydrit II mit einer Teilchengröße zwischen 0,1 und 5 µm enthält.

30. Zusammensetzung nach Anspruch 3, **dadurch gekennzeichnet,** daß sie Calciumsulfat-Anhydrit II mit einer Teilchengröße zwischen 5 und 15 µm enthält.

31. Zusammensetzung nach Anspruch 3, **dadurch gekennzeichnet,** daß sie Calciumsulfat-Anhydrit II mit einer Teilchengröße zwischen 15 und 50 µm enthält.

32. Zusammensetzung nach Anspruch 2, **dadurch gekennzeichnet,** daß der mittlere Durchmesser der sternförmigen dreidimensionalen Kristalle 25 bis 60 µm beträgt.

33. Zusammensetzung nach Anspruch 32, **dadurch gekennzeichnet,** daß der mittlere Durchmesser der Kristalle 30 bis 55 µm beträgt.

34. Zusammensetzung nach Anspruch 32, **dadurch gekennzeichnet,** daß der mittlere Durchmesser der Kristalle 40 bis 50 µm beträgt.

## Revendications

1. Procédé pour préparer une charge radiale, destinée en particulier à être utilisée dans l'industrie papetière, caractérisé en ce qu'il comprend :
- la préparation d'un solide d'hémihydrate de sulfate de calcium ayant une taille de particule comprise entre 0,1 et 50 µm ;
- la préparation d'un solide de sulfate de calcium anhydrite II ayant une taille de particule comprise entre 0,1 et 50 µm ;
- le mélange desdits solides dans des proportions anhydrite II/hémihydrate comprises entre 10:90 et 90:10 % en masse, de préférence entre 15:85 et 35 à 65 % en masse ;
- l'addition de manière contrôlée du mélange anhydrite II/hémihydrate à un milieu aqueux jusqu'à l'obtention d'un degré prédéterminé de sursaturation de la solution, dans un réacteur muni de moyens d'agitation, jusqu'à l'obtention de cristaux de dihydrate de sulfate de calcium en forme d'étoile en dispersion ;
- l'utilisation du sulfate de calcium anhydrite II pour former des germes de cristallisation pour produire des formations radiales de groupes de cristaux divergents tandis que l'hémihydrate de sulfate de calcium est utilisé pour former des cristaux aciculaires qui se lient avec lesdites formations radiales ; et
- le choix des proportions d'eau, d'anhydrite II et d'hémihydrate, de la taille de particule des solides, de la durée et des conditions d'agitation et du degré de sursaturation en fonction de la taille et de la proportion desdits cristaux en forme d'étoile.

2. Produit de charge constitué par des cristaux de dihydrate de sulfate de calcium, en particulier pour la fabrication du papier, caractérisé en ce qu'il est obtenu par cristallisation d'un mélange de sulfate de calcium anhydrite II et d'hémihydrate de sulfate de calcium ayant des tailles de particules comprises entre 0,1 et 50 µm dans une solution aqueuse sursaturée, une partie des cristaux ayant au moins une forme d'étoile tridimensionnelle dont le noyau est formé d'anhydrite II et dont les formations radiales sont formées par cristallisation divergente et linéaire de l'hémihydrate de sulfate de calcium.

3. Composition utile pour préparer une charge pour la fabrication du papier à partir de sulfate de calcium caractérisée en ce qu'elle comprend entre 10 et 90 %, de préférence entre 65 et 85 %, d'un solide d'hémihydrate de sulfate de calcium ayant une taille de particule comprise entre 0,1 et 50 µm, et entre 90 et 10 %, de préférence entre 35 et 15 % de sulfate de calcium anhydre.

4. Procédé selon la revendication 1 caractérisé en ce qu'un hémihydrate de sulfate de calcium ayant une taille de particule comprise entre 0,1 et 5 µm est choisi.

5. Procédé selon la revendication 1 caractérisé en ce qu'un hémihydrate de sulfate de calcium ayant une taille de particule comprise entre 5 et 15 µm est choisi.

6. Procédé selon la revendication 1 caractérisé en ce qu'un hémihydrate de sulfate de calcium ayant une taille de particule comprise entre 15 et 50 µm est choisi.

7. Procédé selon la revendication 1 caractérisé en ce qu'un sulfate de calcium anhydrite II ayant une taille de particule comprise entre 0,1 et 5 µm est choisi.

8. Procédé selon la revendication 1 caractérisé en ce qu'un sulfate de calcium anhydrite II ayant une taille de particule comprise entre 5 et 15 µm est choisi.

9. Procédé selon la revendication 1 caractérisé en ce qu'un sulfate de calcium anhydrite II ayant une taille de particule comprise entre 15 et 50 µm est choisi.

10. Procédé selon l'une quelconque des revendications précédentes caractérisé en ce que l'addition d'eau et desdits solides ainsi que l'extraction de la dispersion de cristaux en forme d'étoile de dihydrate de sulfate de calcium sont continues.

11. Procédé selon la revendication 10 caractérisé en ce que le volume de la solution dans le réacteur est maintenu sensiblement constant.

12. Procédé selon l'une quelconque des revendications précédentes caractérisé en ce que les solides sont maintenus en suspension avec des concentrations de solutés supérieures au point de sursaturation de la suspension.

13. Procédé selon la revendication 11 caractérisé en ce que la dispersion de cristaux est extraite proportionnellement à l'addition d'eau et de solides.

14. Procédé selon la revendication 1 caractérisé en ce que la dispersion de cristaux en forme d'étoile est déshydratée.

15. Produit selon la revendication 2 caractérisé en ce que l'hémihydrate de sulfate de calcium a une taille de particule comprise entre 0,1 et 5 µm.

16. Produit selon la revendication 2 caractérisé en ce que l'hémihydrate de sulfate de calcium a une taille de particule comprise entre 5 et 10 µm.

17. Produit selon la revendication 2 caractérisé en ce que l'hémihydrate de sulfate de calcium a une taille de particule comprise entre 15 et 50 µm.

18. Produit selon la revendication 2 caractérisé en ce que le sulfate de calcium anhydrite II a une taille de particule comprise entre 0,1 et 5 µm.

19. Produit selon la revendication 2 caractérisé en ce que le sulfate de calcium anhydrite II a une taille de particule comprise entre 5 et 15 µm.

20. Produit selon la revendication 2 caractérisé en ce que le sulfate de calcium anhydrite II a une taille de particule comprise entre 15 et 50 µm.

21. Produit selon la revendication 2 caractérisé en ce qu'il s'agit d'une suspension aqueuse ayant une concentration en solides comprise entre 10 et 30 %.

22. Produit selon la revendication 21 caractérisé en ce qu'il a une concentration en solides comprise entre 15 et 20 %.

23. Produit selon l'une quelconque des revendications 2, 15 à 22 caractérisé en ce qu'il s'agit d'une poudre déshydratée qui est redispersable dans un milieu aqueux.

24. Produit selon l'une quelconque des revendications 2, 15 à 23 caractérisé en ce que le diamètre moyen des cristaux est compris entre 25 et 60 µm.

25. Produit selon la revendication 24 caractérisé en ce que le diamètre moyen des cristaux est de 30 à 55 µm.

26. Produit selon la revendication 25 caractérisé en ce que le diamètre moyen des cristaux est de 40 à 50 µm.

27. Composition selon la revendication 3 caractérisée en ce qu'elle contient un hémihydrate de sulfate de calcium ayant une taille de particule comprise entre 5 et 10 µm.

28. Composition selon la revendication 3 caractérisée en ce qu'elle contient un hémihydrate de sulfate de calcium ayant une taille de particule comprise entre 15 et 50 µm.

29. Composition selon la revendication 3 caractérisée en ce qu'elle contient un sulfate de calcium anhydrite II ayant une taille de particule comprise entre 0,1 et 5 µm.

30. Composition selon la revendication 3 caractérisée en ce qu'elle contient un sulfate de calcium anhydrite II ayant une taille de particule comprise entre 5 et 15 µm.

31. Composition selon la revendication 3 caractérisée en ce qu'elle contient un sulfate de calcium anhydrite II ayant une taille de particule comprise entre 15 et 50 µm.

32. Composition selon la revendication 2 caractérisée en ce que le diamètre moyen des cristaux tridimensionnels en forme d'étoile est de 25 à 60 µm.

33. Composition selon la revendication 32 caractérisée en ce que le diamètre moyen des cristaux est de 30 à 55 µm.

34. Composition selon la revendication 32 caractérisée en ce que le diamètre moyen des cristaux est de 40 à 50 µm.
